# EUROPÄISCHE PATENTSCHRIFT

(11) **EP 0 725 894 B1**
(45) Veröffentlichungstag und Bekanntmachung des Hinweises auf die Patenterteilung: **21.01.1998**
(21) Anmeldenummer: 94930924.9
(22) Anmeldetag: 25.10.1994
(51) Int. Cl.: F02G 1/044, F16H 21/36

(54) **ENERGIEERZEUGUNGSEINRICHTUNG**
POWER GENERATING ARRANGEMENT
SYSTEME DE PRODUCTION D'ENERGIE

(30) Priorität: 29.10.1993 DE 4336982
(43) Veröffentlichungstag der Anmeldung: 14.08.1996
(73) Patentinhaber: Daimler-Benz Aerospace Aktiengesellschaft, 80995 München (DE)
(72) Erfinder: Ehrig, Dietrich, D-28879 Grasberg (DE)
(74) Vertreter: Hansmann, Dierk, Dipl.-Ing.
(86) Internationale Anmeldenummer: DE9401250
(87) Internationale Veröffentlichungsnummer: WO9512064

(56) Entgegenhaltungen:
- DE-A- 3 723 950
- DE-C- 875 110
- US-A- 3 277 743

## Beschreibung

Die Erfindung betrifft eine Energieerzeugungseinrichtung, insbesondere für Satelliten und Raumstationen, auf der Basis von Stirlingmotoren, bei dem die Kolben der Stirlingmotoren über Kolbenstangen mit einem Rädergetriebe verbunden sind.

Nach dem Stirling-Kreisprozeß arbeitende Motoren sind seit langem bekannt. Wie bei Diesel- und Ottomotoren beruht auch ihr Arbeitsprinzip darauf, daß ein Prozeßgas bei niedriger Temperatur komprimiert wird und anschließend bei hoher Temperatur expandiert. Im Gegensatz zu den beiden letztgenannten Motoren wird das Prozeßgas beim Stirlingmotor jedoch nicht durch eine innere Verbrennung erhitzt, sondern die Wärme wird dem Prozeßgas kontinuierlich von außen zugeführt. Deshalb können mit dem Stirlingmotor Temperaturdifferenzen in nahezu beliebigen Bereichen in mechanische Arbeit umgewandelt werden.

Nachdem der Stirlingmotor ursprünglich als Einzylindermotor mit zwei belasteten Kolben ausgebildet war und später überwiegend in der sogenannten V-Anordnung verwendet wurde, bei der ein Verdränger in einem und ein Kolben in einem zweiten Zylinder angeordnet war, kommen in jüngerer Zeit sogenannte doppelt wirkende Stirlingmotoren zum Einsatz, bei denen beispielsweise vier Zylinder in geeigneter Phasenverschiebung hintereinander arbeiten. Jeder dieser Zylinder besitzt in dieser nahezu beliebigen Bereichen in mechanische Arbeit umgewandelt werden.

Nachdem der Stirlingmotor ursprünglich als Einzylindermotor mit zwei belasteten Kolben ausgebildet war und später überwiegend in der sogenannten V-Anordnung verwendet wurde, bei der ein Verdränger in einem und ein Kolben in einem zweiten Zylinder angeordnet war, kommen in jüngerer Zeit sogenannte doppelt wirkende Stirlingmotoren zum Einsatz, bei denen beispielsweise vier Zylinder in geeigneter Phasenverschiebung hintereinander arbeiten. Jeder dieser Zylinder besitzt in dieser letztgenannten Anordnung nur einen Kolben, der zugleich als Verdränger für den nachfolgenden Kolben dient. So ist aus der DE-A-37 23 950 eine nach dem StirlingProzeß arbeitende Energieerzeugungseinrichtung der eingangs genannten Art bekanntgeworden, bei der zwei rechtwinklig zueinander angeordnete, sich jeweils gegenüberliegende Kolbenpaare mit einem zentrale angeordneten hypozikloidischen Exzenter-Kurbelgetriebe, insbesondere einem Parson-Getriebe, verbunden sind. Allen Stirlingmotoren gemeinsam sind die Komponenten Erhitzer, Regenerator und Kühler, die bei der V-Anordnung zwischen dem Verdränger und dem Kolben, beim doppelt wirkenden Stirlingmotor jeweils zwischen den einzelnen Zylindern angeordnet sind.

Stirlingmotoren werden in der Regel mit einer ständig brennenden Flamme betrieben, wobei die unterschiedlichsten Brennstoffe Verwendung finden. Vereinzelt wurde auch bereits vorgeschlagen, Stirlingmotoren mit Sonnenenergie zu betreiben und diese beispielsweise zur Meerwasserentsalzung einzusetzen. Neben dem erwähnten Vorteil eines für die Erzeugung mechanischer Wärme beliebigen nutzbaren Temperaturintervalls zeichnen sich Stirlingmotoren durch einen hohen Wirkungsgrad, einen günstigen Drehmomentverlauf im Bereich der Betriebsdrehzahlen sowie einen vibrationsfreien Lauf aus.

Trotz dieser offenkundigen Vorteile ist das Einsatzgebiet von Stirlingmotoren noch immer sehr begrenzt. So finden in Satelliten und Raumstationen derzeit in erster Linie fotovoltaische Energieerzeugungsanlagen Verwendung, obwohl die mit ihnen erzielbare Energieausbeute vergleichsweise gering ist. Insbesondere wird bei künftigen Raumstationen der Energiebedarf so hoch sein, daß er auf fotovoltaischem Wege kaum noch wird gedeckt werden können.

Aufgabe der Erfindung ist es, eine Energieerzeugungseinrichtung auf der Basis des Stirling-Heißluftmotors bereitzustellen, die sowohl für terrestrische Anwendungen als auch für einen Einsatz in Orbitalstationen geeignet ist.

Die Erfindung löst diese Aufgabe durch eine Energieerzeugungseinrichtung mit den kennzeichnenden Merkmalen des Patentanspruchs 1. Vorteilhafte Weiterbildungen der erfindungsgemäßen Energieerzeugungseinrichtung sind in den weiteren Ansprüchen angegeben.

Dabei ermöglicht die bei der Energieerzeugungseinrichtung gemäß der Erfindung vorgesehene Kombination von Stirlingmotoren und einem Rädergetriebe mit Massenausgleich einen extrem leichten Aufbau der Anordnung. Da bei diesem Getriebe keine Massenkräfte erster und zweiter Ordnung wirksam werden, weist die Energieerzeugungseinrichtung nach der Erfindung ein Minimum an Vibrationen auf.

Ein weiterer Vorteil der erfindungsgemäßen Energieerzeugungseinrichtung liegt darin, daß die kurzhubigen Zylinder nicht in jedem Fall stehend, sondern auch liegend angeordnet werden können. Die Bauhöhe einer solchen Energieerzeugungseinrichtung, gleich, ob sie mit Solarenergie oder über Verbrennungswärme angetrieben wird, ist dabei in etwa nur halb so groß wie die herkömmlicher Energieerzeugungsanlagen auf der Basis von Stirlingmotoren bei vergleichbarer Ausgangsleistung. Zugleich ergibt sich eine Gewichtseinsparung gegenüber diesen herkömmlichen Systemen, bei denen in der Regel extrem schwere Getriebe, wie Taumelscheibengetriebe mit Gleitsteinen, Doppelkurbelwellensysteme oder v-förmige Anordnungen, um etwa 50 %

Die gesamte Einrichtung kann überdies vollständig gekapselt aufgebaut werden, deshalb brauchen die Prozeßgasdrücke von üblicherweise mehr als 10 MPa (Prozeßgas ist dabei vorzugsweise Helium oder Wasserstoff) nicht zur Umgebung hin abgedichtet zu werden. Im Getriebe herrscht dabei ein Druck, der zwischen dem Druck beim Kompressions- und dem Arbeitshub liegt. Da nur die auftretenden Differenzen zwischen diesem mittleren Druck und dem Kompressions- bzw. Arbeitsdruck abgedichtet werden müssen, ist der an den Kolbenringen auftretende bzw. der von den Kolbenringen an den Laufflächen hervorgerufene Verschleiß äußerst gering, so daß die erfindungsgemäße Energieerzeugungseinrichtung praktisch wartungsfrei ist und sich durch eine hohe Lebensdauer auszeichnet, was sie insbesondere für den Einsatz in Raumflugmissionen geeignet macht.

In der Zeichnung ist ein Ausführungsbeispiel der Erfindung schematisch dargestellt. Es zeigen:
- Fig. 1: einen Horizontalschnitt durch einen Stirlingmotor mit vier Zylindern,
- Fig. 2: eine Explosionsdarstellung des Kreuzrädergetriebes in Fig 1,
- Fig. 3: eine Prinzipskizze des Zusammenwirkens der in den Figuren 1 und 2 gezeigten Anordnung und
- Fig. 4 und 5: eine prinzipielle Gegenüberstellung eines Schubkurbel- und eines Rädergetriebes.

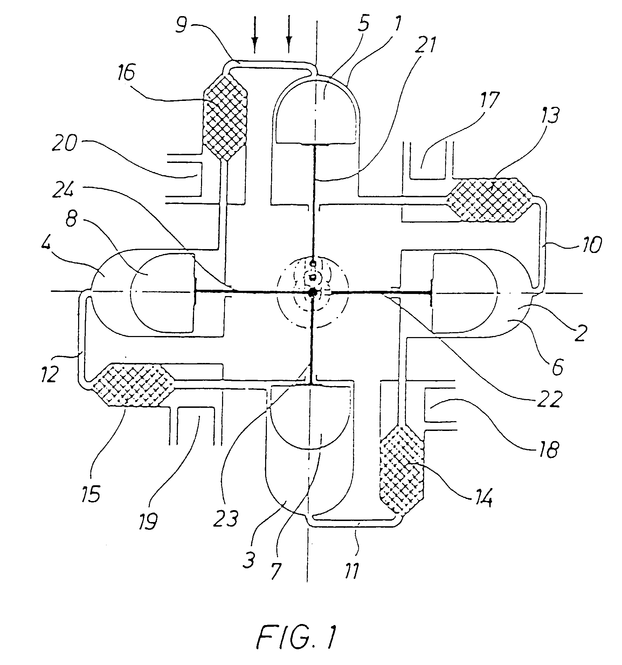

Bei der Anordnung gemäß Fig. 1 handelt es sich um die schematische Darstellung eines doppelt wirkenden Stirlingmotors mit vier Zylindern 1 bis 4, die mit einer Phasenverschiebung von jeweils 90° hintereinander arbeitet. In jedem der Zylinder 1 bis 4 ist ein Kolben 5 bis 8 angeordnet, der zugleich als Verdränger für den nachfolgenden Zylinder arbeitet. Zwischen je zwei aufeinanderfolgenden Zylindern sind jeweils ein Erhitzer 9 bis 12, ein Regenerator 13 bis 16 und ein Kühler 17 bis 20 angeordnet. Schließlich ist jeder der Kolben 5 bis 8 über eine Kolbenstange 21 bis 24 mit einem Kreuzrädergetriebe 25 verbunden.

Die für die Verrichtung mechanischer Arbeit erforderliche Energie wird dem Prozeßgas, im Fall des hier beschriebenen Ausführungsbeispiels Wasserstoff oder Helium, durch Strahlungswärme im Bereich der Erhitzer 9 bis 12 zugeführt, wie dies in Fig. 1 für den Erhitzer 9 durch Pfeile angedeutet ist. Dabei ist jeweils die dem Erhitzer 9 bis 12 zugewandte Seite der Zylinder 1 bis 4 die heiße Seite, während die den Kühlern 17 bis 20 zugewandte Seite die kalte Seite ist. Das Prozeßgas wird jeweils zwischen zwei aufeinanderfolgenden Kolben zyklisch hin- und hergeschoben.

Die zwischen jedem der Kühler 17 bis 20 und dem zugeordneten Erhitzer 9 bis 12 jeweils angeordneten Regeneratoren 13 bis 16 dienen als Kurzzeit-Wärmespeicher bzw. Absorber, die einerseits dem aus dem heißen Bereich des Zylinders ausströmenden Prozeßgas Wärme entziehen, so daß diese nicht vollständig als Abwärme im Kühler verlorengeht, und die andererseits die gespeicherte Wärme an das in den heißen Bereich einströmende Prozeßgas abgeben und es damit schon aufheizen, bevor es den Erhitzer erreicht. Bei dem hier beschriebenen Ausführungsbeispiel sind die Regeneratoren 13 bis 16 durch eine Minimierung der Strömungsverluste und Totvolumina sowie durch eine Maximierung ihrer Wärmespeicherkapazität thermodynamisch so optimiert, daß sie hohe Wirkungsgrade der Energieerzeugungseinrichtung ermöglichen. Der Abtransport der Verlustwärme von den Kühlern 17 bis 20 erfolgt über in der Figur nicht dargestellte Wärmerohre, sogenannte Heat-pipes.

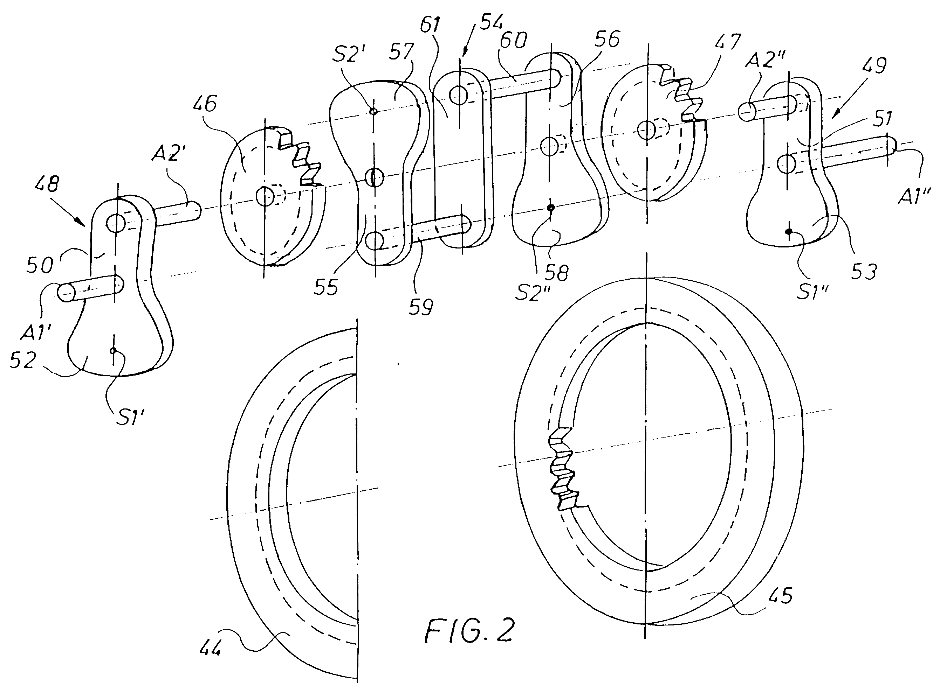

Infolge der kreuzförmigen Anordnung der vier Zylinder 1 bis 4 mit dem Kreuzrädergetriebe 25 ergibt sich ein weitgehend gleichförmiger Verlauf des Drehmomentes bei jeder 360°-Drehung, so daß bei dieser Anordnung auf ein energiezehrendes Schwungrad verzichtet werden kann. Der genaue Aufbau des Kreuzrädergetriebes 25 ist dabei aus Fig. 2 ersichtlich.

Die Explosionsdarstellung gemäß Fig. 2 zeigt, daß das Kreuzrädergetriebe 25 zwei innenverzahnte Hohlräder 44 und 45 aufweist, in denen zwei Planetenräder 46 und 47 umlaufen. Die Drehachsen der beiden Planetenräder 46 und 47 sind jeweils auf den beiden Teilstücken 48 und 49 einer zweigeteilt ausgebildeten inneren Kurbelwelle gelagert. An die Kurbelwangen 50 bzw. 51 dieser beiden Teilstücke 48 und 49 sind jeweils Gegengewichte 52 bzw. 53 angeformt. Die Schwerpunkte S1' bzw. S1" dieser Gegengewichte 52 und 53 weisen den gleichen Abstand von den Drehachsen A1' und A1" der beiden Teilstücke 48 und 49 auf wie die Anlenkpunkte A2' und A2" zugleich die Drehachsen für die Planetenräder 46 und 47 symbolisieren.

Die äußere Kurbelwelle 54 ist zweifach gekröpft ausgebildet, wobei wiederum die in entgegengesetzte Richtung weisenden Kurbelwangen 55 und 56 Gegengewichte 57 und 58 tragen. Auch bei diesen sind die Schwerpunkte S2' und S2" um den gleichen Abstand von der Drehachse der äußeren Kurbelwelle 54, die durch die Verbindung der beiden Anlenkpunkte A2' und A2" definiert ist, entfernt, wie zwei Achsenabschnitte 59 und 60, die die Anlenkpunkte für die Kolbenstangen 21 bis 24 bilden und die durch die Stange 61 miteinander verbunden sind.

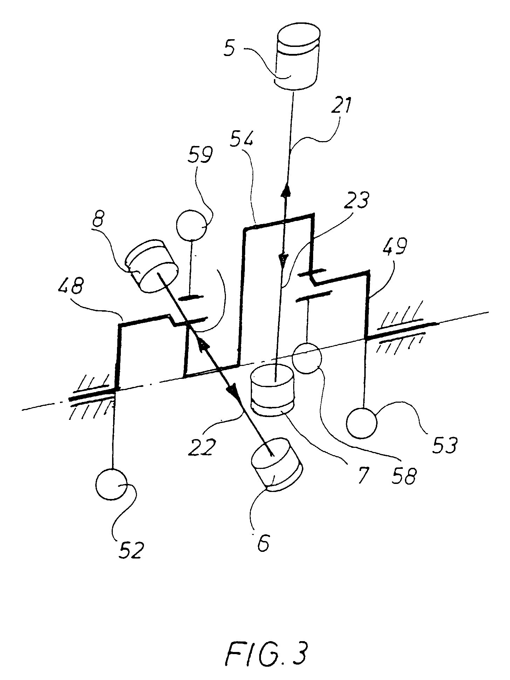

In Fig. 3 ist die gesamte Anordnung in einer dreidimensionalen Schemaskizze verdeutlicht. Die Pfeile kennzeichnen dabei die Hubbewegung der Kolben 5 bis 8, die in eine Rotationsbewegung umgesetzt wird, die an den Abtriebsenden der beiden Teilstücke 48 und 49 der inneren Kurbelwelle zur Leistungserzeugung abgenommen werden kann.

Während die Schwerpunkte S1', S1" der Gegengewichte 52 und 53 auf der gleichen Kreisbahn umlaufen wie die Drehachsen der Planetenräder 46 und 47, führen die Schwerpunkte S2', S2" der Gegengewichte 58 und 59 jeweils eine lineare Auf- und Abbewegung aus. Alle Gegengewichte 52,53,58 und 59 zusammen führen durch ihre unterschiedlichen Bewegungsabläufe dazu, daß bei dem in Fig. 2 dargestellten Kreuzrädergetriebe keinerlei Massenkräfte erster Ordnung wirksam werden, da bei einem derartigen Rädergetriebe Massenkräfte zweiter Ordnung konstruktionsbedingt nicht auftreten, und somit ein vollständiger Massenausgleich erreicht ist, der einen absolut vibrationsfreien Lauf der gesamten Energieerzeugungseinrichtung gewährleistet.

Zu erwähnen ist, daß dieser vollständige Massenausgleich für jedes der beiden sich gegenüberliegenden Zylinderpaare 1, bzw. 2,4 separat erzielt wird und der Massenausgleich somit unmittelbar am Ort der Entstehung der zu kompensierenden Massenkräfte, nämlich im Getriebe selbst, herbeigeführt wird. Hieraus resultiert die Möglichkeit einer extrem kompakten Bauweise mit einem sehr kleinen Getriebegehäuse, das durch den Betriebsdruck des Prozeßgases beaufschlagt werden kann. Komplizierte Abdichtungen an den vier Kolbenstangen, wie sie sonst bei doppelt wirkenden Stirlingmotoren üblich sind, können dadurch entweder ganz entfallen oder zumindest wesentlich vereinfacht werden. Die Abdichtung der kraftabgebenden Getriebewelle kann dabei entweder durch Gleitringdichtungen erfolgen oder aber es kann eine gekapselte Magnetkupplung für die Kraftübertragung vorgesehen werden.

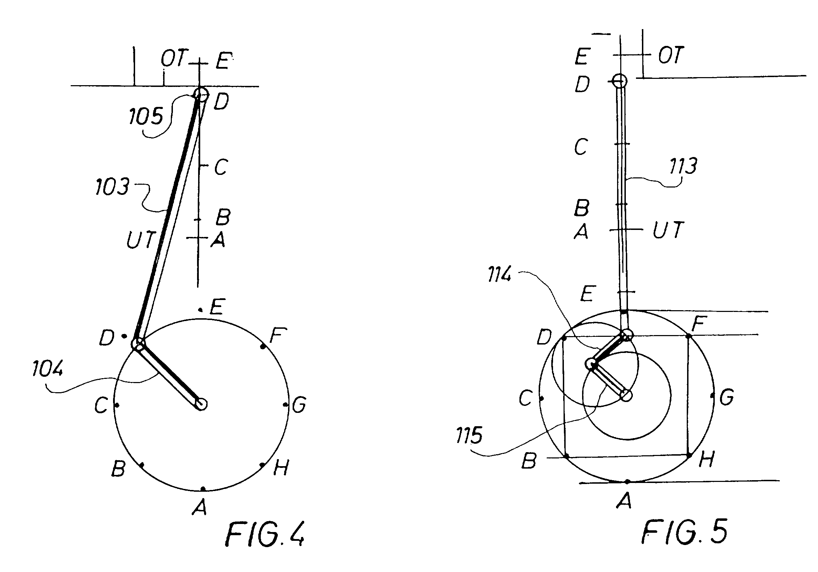

Im Vergleich zu den für derartige Energieerzeugungseinrichtungen ansonsten gebräuchlichen Schubkurbelgetrieben besitzt das Kreuzrädergetriebe ferner den Vorteil einer gleichsam "unendlich" langen Kolbenstange. Dies bedeutet, daß bei einem solchen Rädergetriebe der Kolbenhub bei gleicher zurückgelegter Wegstrecke der inneren Kurbelwelle in der Nähe des oberen und des unteren Totpunktes gleich groß sind, während er bei einem üblichen Schubkurbelgetriebe in der Nähe des oberen Totpunktes doppelt so groß ist wie im Bereich des unteren Totpunktes. Dies ist abschließend anhand der Figuren 4 und 5 verdeutlicht.

Bei dem in Fig. 4 dargestellten Schubkurbelgetriebe wird die oszillierende Bewegung des Kolbens eines Antriebszylinders über eine Koppel oder Pleuelstange 103 auf eine auf einer Kreisbahn umlaufende Kurbel 104 übertragen und auf diese Weise in eine Drehbewegung umgewandelt. Die Anlenkung der Pleuelstange 103 am Kolben erfolgt dabei über ein Kreuzgelenk 105, da die Pleuelstange 103 eine zweidimensionale Bewegung in der Zeichenebene ausführt.

Demgegenüber vollführt bei dem in Fig. 5 dargestellten Rädergetriebe die Kolbenstange 113 die gleiche lineare Bewegung wie die zugehörige Kolbenstange. Die Kolbenstange 113 ist über eine äußere Kurbel 114 an einer inneren Kurbel 115 angelenkt, die, wie die Kurbel 104 des Schubkurbelgetriebes, auf einer Kreisbahn umläuft und an deren Drehachse die Antriebsleistung des Zylinders als Rotationsenergie abgenommen werden kann. Die innere Kurbel 115 bildet zugleich den Steg für ein hier nicht dargestelltes Planetenrad, das mit seiner Außenverzahnung, wie in Fig. 2 ersichtlich, auf einem innenverzahnten Hohlrad umläuft Der Durchmesser des Planetenrades ist dabei halb so groß wie derjenige des Hohlrades; die Länge der äußeren Kurbel 114 entspricht exakt der Länge der inneren Kurbel 115.

Die Kreisbewegung der Kurbeln 104 und 115 ist in den Figuren 4 und 5 jeweils in acht Positionen unterteilt, von denen für die Positionen A bis E auch die zugehörigen Positionen des sich bewegenden Kolbens, dargestellt durch den Endpunkt der Kolbenstangen 103 bzw. 113, jeweils mit in die Figur eingetragen sind. Bei dem in Fig. 4 gezeigten Schubkurbelgetriebe legt der Kolben zwischen den Positionen A und B bzw. D und E unterschiedlich große Wege zurück; bei einer Kurbellänge von 40 mm beispielsweise 4 mm zwischen A und B bzw. 8 mm zwischen D und E.

Demgegenüber ist bei dem in Fig. 5 dargestellten Rädergetriebe der Kolbenhub für beide Strecken A,B bzw. D,E jeweils etwa 6 mm, wenn die beiden Kurbeln 114 und 115 zusammen ebenfalls eine Länge von 40 mm haben. Für einen doppelt wirkenden Stirlingmotor mit 4 jeweils um 90°versetzt arbeitenden Zylindern hat dies entscheidende Auswirkungen auf den zu erzielenden Verdichtungsenddruck und damit auf den Wirkungsgrad der gesamten Energieerzeugungsanlage. Dies erklärt sich wie folgt: Bei der größten Verdichtung steht der Kolben des "kalten" Zylinders in Position D, d.h. etwa 45° vor dem oberen Totpunkt OT, derjenige des "heißen" Arbeitszylinders in Position F, etwa 45° nach dem oberen Totpunkt. Exakt in dieser Position der beiden Zylinder ergibt sich gemäß Fig. 5 für das Rädergetriebe (bei den angegebenen Abmessungen) ein geringstes Totvolumen bei einem Hub vom 2 x 6 mm, d.h. 12 mm. Bei einem herkömmlichen Schubkurbelgetriebe hingegen entspricht dieses geringste Totvolumen einem Hub von 2 x 8 mm, d.h. 16 mm. Der erzielbare Verdichtungsenddruck und damit der Wirkungsgrad ist somit bei Verwendung des Kreuzrädergetriebes wesentlich höher als bei Verwendung eines herkömmlichen Schubkurbelgetriebes.

## Patentansprüche

1. Energieerzeugungseinrichtung, insbesondere für Satelliten und Raumstationen, auf der Basis von Stirlingmotoren, bei dem die Kolben der Stirlingmotoren über Kolbenstangen mit einem Rädergetriebe verbunden sind, dadurch gekennzeichnet, daß wenigstens ein außenverzahntes Planetenrad (46,47) von jeweils einer ersten, inneren Kurbel (48,49) geführt in wenigstens einem innenverzahnten Hohlrad (44,45) umläuft, wobei die innere Kurbel (48,49) über eine zweite, äußere Kurbel (54) gelenkig mit der Kolbenstange (21-24) des Kolbens (5-8) verbunden ist, und daß sowohl die innere Kurbel (48,49) als auch die äußere Kurbel (54) jeweils mit Gegengewichten (52,53,57,58) versehen sind.

2. Energieerzeugungseinrichtung nach Anspruch 1, dadurch gekennzeichnet, daß vier Stirlingmotoren kreuzförmig angeordnet sind.

3. Energieerzeugungseinrichtung nach Anspruch 2, dadurch gekennzeichnet, daß die Kolben (5-8) der Stirlingmotoren mit einem zentrisch angeordneten Kreuzrädergetriebe (25) verbunden sind.

4. Energieerzeugungseinrichtung nach Anspruch 3, dadurch gekennzeichnet, daß zwei Hohlräder (44,45) mit jeweils einem darin umlaufenden Planetenrad (46,47) über eine gemeinsame innere Kurbelwelle (48,49) zusammengefaßt sind und daß eine mit dieser gelenkig verbundene äußere Kurbelwelle (54) von den Kolbenstangen (21-24) der Arbeitszylinder (1-4) beaufschlagt wird.

5. Energieerzeugungseinrichtung nach Anspruch 4, dadurch gekennzeichnet, daß die innere Kurbelwelle (48,49) zweigeteilt ausgebildet ist.

6. Energieerzeugungseinrichtung nach Anspruch 4 oder 5, dadurch gekennzeichnet, daß die äußere Kurbelwelle (54) zur Bildung zweier um 180° gegeneinander versetzter äußerer Kurbeln (55,56) zweifach gekröpft ausgebildet ist und daß an jeder der beiden äußeren Kurbeln (55,56) die Kolbenstangen (21-24) zweier einander jeweils gegenüberliegender Arbeitszylinder (1-4) angreifen.

7. Energieerzeugungseinrichtung nach einem der Ansprüche 1 bis 6, dadurch gekennzeichnet, daß der Durchmesser des Planetenrades (46,47) die Hälfte des Durchmessers des Hohlrades (44,45) beträgt.

8. Energieerzeugungseinrichtung nach einem der Ansprüche 1 bis 7, dadurch gekennzeichnet, daß die Länge der inneren Kurbel (48,49) gleich derjenigen der äußeren Kurbel (54) ist.

## Claims

1. Power generating device, in particular for satellites and space stations, based on Stirling engines, wherein the pistons of the Stirling engines are connected by piston rods to a wheel gear, characterized in that at least one externally geared planet wheel (46, 47) rotates, guided in each case by a first inner crank (48, 49), in at least one internally geared ring gear (44, 45), the inner crank (48, 49) being connected by a second outer crank (54) in an articulated manner to the piston rod (21-24) of the piston (5-8), and that both the inner crank (48, 49) and the outer crank (54) are provided in each case with counter-weights (52, 53, 57, 58).

2. Power generating device according to claim 1, characterized in that four Stirling engines are arranged in the shape of a cross.

3. Power generating device according to claim 2, characterized in that the pistons (5-8) of the Stirling engines are connected to a centrically disposed cross wheel gear (25).

4. Power generating device according to claim 3, characterized in that two ring gears (44, 45) are combined with in each case one planet wheel (46, 47), which rotates therein, by means of a common inner crankshaft (48, 49) and that an outer crankshaft (54) connected in an articulated manner to the latter is acted upon by the piston rods (21-24) of the working cylinders (1-4).

5. Power generating device according to claim 4, characterized in that the inner crankshaft (48, 49) is of a two-part construction.

6. Power generating device according to claim 4 or 5, characterized in that the outer crankshaft (54) is bent twice at right angles in order to form two outer cranks (55, 56) offset by 180° relative to one another and that the piston rods (21-24) of two working cylinders (1-4) each lying opposite one another act upon each of the two outer cranks (55, 56).

7. Power generating device according to one of claims 1 to 6, characterized in that the diameter of the planet wheel (46, 47) is half the diameter of the ring gear (44, 45).

8. Power generating device according to one of claims 1 to 7, characterized in that the length of the inner crank (48, 49) is equal to that of the outer crank (54).

## Revendications

1. Dispositif de production d'énergie, plus particulièrement pour des satellites et des stations spatiales, sur la base de moteurs Stirling, dans lequel les pistons des moteurs Stirling sont connectés par l'intermédiaire de tiges de piston à un train d'engrenages, caractérisé en ce que au moins une roue planétaire (46, 47) à denture extérieure entraînée par un premier vilebrequin interne (48, 49) tourne dans au moins une couronne de train planétaire (44, 45) à denture interne, le vilebrequin interne (48, 49) étant connecté par l'intermédiaire d'un second vilebrequin externe (54) aux tiges de piston (21-24) des pistons (5-8) et en ce que tant le vilebrequin interne (48, 49) que le vilebrequin externe (54) sont pourvus de contrepoids (52, 53, 57, 58).

2. Dispositif de production d'énergie suivant la revendication 1, caractérisé en ce que quatre moteurs Stirling sont disposés en croix.

3. Dispositif de production d'énergie suivant la revendication 2, caractérisé en ce que les pistons (5-8) des moteurs Stirling sont connectés à un train d'engrenages croisés central (25).

4. Dispositif de production d'énergie suivant la revendication 3, caractérisé en ce que deux couronnes de train planétaire (44, 45) avec une roue planétaire (46, 47) tournant dans celles-ci sont assemblées par l'intermédiaire d'un vilebrequin interne commun (48, 49), et en ce que un vilebrequin externe (54) articulé sur celui-ci entraîné par les tiges de piston (21-24) des cylindres de travail (1-4).

5. Dispositif de production d'énergie suivant la revendication 4, caractérisé en ce que le vilebrequin interne (48, 49) se compose de deux parties.

6. Dispositif de production d'énergie suivant la revendication 4 ou 5, caractérisé en ce que le vilebrequin externe (54) pour former deux manivelles externes (55, 56) décalées l'une de l'autre de 180 ° est contre-coudé à deux reprises et en ce que sur chaque manivelle externe (55, 56) s'engrènent les tiges de piston (21-24) de deux cylindres (1-4) opposés l'un à l'autre.

7. Dispositif de production d'énergie suivant l'une ou l'autre des revendications 1 à 6, caractérisé en ce que le diamètre de la roue planétaire (46, 47) atteint la moitié du diamètre de la couronne de train planétaire (44, 45).

8. Dispositif de production d'énergie suivant l'une ou l'autre des revendications 1 à 7, caractérisé en ce que la longueur du vilebrequin interne (48, 49) est égale à celle du vilebrequin externe (54).
